# EUROPÄISCHE PATENTSCHRIFT

(11) **EP 3 707 364 B1**
(45) Veröffentlichungstag und Bekanntmachung des Hinweises auf die Patenterteilung: **10.04.2024**
(21) Anmeldenummer: 18799492.6
(22) Anmeldetag: 05.11.2018
(51) Int. Cl.: F02K 7/06, F02K 1/08

(54) **PULSANTRIEB**
PULSE DRIVE
PROPULSION À DÉTONATION PULSÉE

(30) Priorität: 06.11.2017 CH 13302017
(43) Veröffentlichungstag der Anmeldung: 16.09.2020
(73) Patentinhaber: P-Wave AG, 5622 Waltenschwil (CH)
(72) Erfinder: RÜEGG, Hans, 5622 Waltenschwil (CH); PETERHANS, Thomas, 5622 Waltenschwil (CH); SUTTER, Manuel, 4053 Basel (CH)
(74) Vertreter: E. Blum & Co. AG
(86) Internationale Anmeldenummer: PCT/EP2018/080097
(87) Internationale Veröffentlichungsnummer: WO 2019/086647

(56) Entgegenhaltungen:
- WO-A1-2014/018416
- US-A- 1 980 266
- US-A- 2 480 626
- US-A1- 2011 030 340

## Beschreibung

Die Erfindung bezieht sich auf eine Pulsantriebsmaschine und ein Verfahren zum wiederholten Erzeugen von Explosionen zur Energieumwandlung, beispielsweise zur Schuberzeugung, insbesondere in Luftfahrzeugen.

Es sind Antriebsmaschinen bekannt, sog. Pulse Detonation Engines (PDE), bei denen anstelle einer kontinuierlichen Verbrennung unter konstantem Druck die Temperaturund Drucksteigerung der isochoren Verbrennung unter konstantem Volumen, d.h. durch Explosionen, verwendet wird. Im Gegensatz zum Explosionsmotor, in welchem der erzeugte Druck direkt den Kolben antreibt, wird eine Maximierung der kinetischen Energie der ausströmenden Verbrennungsgase angestrebt. Es sollen also die bei der Explosion erzeugten Rauchgase zur Erzeugung von maximalem Schub auf Maximalgeschwindigkeit beschleunigt werden und für Antriebszwecke eingesetzt werden. Bekannt wurden die Holzwarth-Turbine zur Stromerzeugung sowie Pulsstrahltriebwerke welche mit hoher Frequenz mittels Explosionen Schub erzeugten.

In der Europäischen Patentanmeldung EP 2 319 036 A2 (und ebenfalls US 2011/180020 A1) wird ein Verfahren zur Erzeugung von Druckimpulsen mittels Explosionen beschrieben. Dabei wird in einem durch ein Ventil verschlossenen Behälter eine Mischung aus Oxydationsmittel und Brennstoff gezündet und eine Explosion erzeugt. Das Ventil wird kurz vor der Zündung geöffnet und die Druckwelle der Explosion kann über die Austrittsöffnung an ihren Bestimmungsort geleitet werden. Das Gerät, auch Explosionsgenerator (EG) genannt, wird heute für die Reinigung von verschmutzten Dampfkesseln eingesetzt.

In der Europäischen Patentanmeldung EP 3 146 270 A1 (und ebenfalls US 2017/082069 A1) wird ein Pulsdetonationsantrieb offenbart, mit einer Stelleinrichtung, welche beim Ausströmen von Explosionsgasen durch eine Austrittsdüse ein Flächenverhältnis zwischen der Düseneintrittsfläche und der Düsenaustrittsfläche einstellt, welches mindestens annähernd einem idealen Flächenverhältnis zur Erzeugung einer maximalen Austrittsgeschwindigkeit der Explosionsgase in Abhängigkeit des Drucks im Explosionsraum folgt.

US 1 980 266 beschreibt einen pulsierend betriebenen Düsenantrieb in welchem ein Satz von Einlassventilen einer Brennkammer mechanisch an eine oder mehrere Auslassdüsen sowie an eine Zündvorrichtung gekoppelt ist, so dass nach einem Befüllen der Brennkammer mit einem Luft-Treibstoff-Gemisch die Einlassventile geschlossen und die Auslassdüsen geöffnet werden, und eine Zündung erst dann ausgelöst wird, wenn die Auslassdüsen vollständig geöffnet sind.

WO 2014/018416 A1 beschreibt eine Turbine mit je einer feststehenden Platte und einer rotierenden Platte am Eingang und am Ausgang einer Brennkammer. Die Platten am Ausgang der Brennkammer sind so geformt, dass bei einer gleichförmigen Drehung der rotierenden Platte die offene Fläche zwischen den Platten gleichförmig zunimmt und wieder abnimmt.

Eine mögliche Aufgabe der Erfindung ist, eine Vorrichtung und ein Verfahren der eingangs genannten Art zu schaffen, welche eine verbesserte Umsetzung der bei der Explosion freigesetzten Energie in kinetische Energie des Rauchgases bewirken.

Diese Aufgabe lösen eine Vorrichtung und ein Verfahren mit den Merkmalen der entsprechenden unabhängigen Patentansprüche.

Die Pulsantriebsmaschine dient zum wiederholten Erzeugen von Explosionen und zum Umsetzen von chemischer Energie in kinetische Energie von ausströmenden Abgasen der Explosionen, insbesondere zum Erzeugen von Schub zum Antrieb eines Luftfahrzeuges. Sie weist auf:
- eine Brennkammer als Explosionsraum,
- mindestens eine Zufuhrleitung zum Zuführen eines fliessfähigen explosionsfähigen Materials oder von Komponenten, die bei Vermischung ein explosionsfähiges Material bilden, zur Brennkammer;
- eine Ablassvorrichtung zum gerichteten Ablassen eines durch Zündung des explosionsfähigen Materials im in der Brennkammer erzeugten Gasdrucks,
- ein bewegliches Düsenregelelement als Verschlusselement zum teilweisen oder gänzlichen Verschliessen der Ablassvorrichtung,
- ein Stellelement, welches dazu ausgebildet ist, nach einem Öffnen der Ablassvorrichtung und während eines Ausströmens von Explosionsgasen durch die Ablassvorrichtung die Ablassvorrichtung weiter (sukzessive) zu öffnen.

Dabei weist die Ablassvorrichtung mehrere Teildüsen zum Ablassen des Gasdrucks auf, und ist eine Stellung der Teildüsen durch das Stellelement einstellbar.

Die Teildüsen entsprechen jeweils separaten Öffnungen der Ablassvorrichtung. Die einzelnen Öffnungen sind im Prinzip einzeln verschliessbar, können aber in einer Ausführungsform gemeinsam angesteuert und gemeinsam verschlossen werden.

Bei der Verwendung von mehreren einzelnen kleinen Teildüsen kann mit dem gleichen Hub des Stellelements eine grössere Querschnittfläche freigegeben werden, als bei der Verwendung von nur einer Düse mit nur einer Düsenöffnung. Das heisst, dass mit nur einer grossen Düse das Stellelement wesentlich weiter geöffnet werden muss, um die gleiche Querschnittfläche freizugeben. Dies bedeutet, dass die Geschwindigkeit des Stellelements höher sein muss, um die gleiche Zunahme der Querschnittsfläche pro Zeiteinheit zu erreichen. In der Praxis ist die maximale Geschwindigkeit des Stellelements eine kritische, limitierende Grösse. Es kann darum von Vorteil sein, wenn die nötige Geschwindigkeit des Stellelements möglichst gering und die dabei freigegebene Fläche möglichst maximal gehalten werden.

Damit wird mit der Summe der Teildüsen eine Düse realisiert, insbesondere eine konvergent-divergente, welche gewährleistet, dass während der gesamten Ausströmzeit immer das optimale, ideale Flächenverhältnis zwischen Düsenende (Düsenaustrittsfläche) und Düsenhals (Düseneintrittsfläche) zumindest annähernd eingestellt wird. Dadurch kann idealerweise die Ausströmgeschwindigkeit der Abgase der Vorrichtung, respektive deren kinetische Energie, zumindest annähernd maximiert werden. Vorzugsweise übersteigt die Ausströmgeschwindigkeit die Schallgeschwindigkeit. Wenn mit den Abgasen die Vorrichtung respektive ein Fahrzeug direkt angetrieben wird, so resultiert entsprechend der Ausströmgeschwindigkeit ein Schub, der den Antrieb bewirkt. Dabei kann durch die jeweilige Öffnungsweite der Ablassvorrichtung der Schub entsprechend dem Innendruck maximiert werden. Wenn mit den Abgasen eine Turbine angetrieben wird, kann nur ein Teil der kinetischen Energie der Abgase dazu verwendet werden. Je nach Konstruktion und Einstellung dieser Turbine kann ein verbleibender Teil der kinetischen Energie am Auslass der Turbine direkt zum Antreiben der Vorrichtung respektive eines Fahrzeuges verwendet werden.

Insgesamt kann mit der Vorrichtung ein hoher Wirkungsgrad bei der Umsetzung chemischer Energie in mechanische Energie respektive Arbeit realisiert werden. Als chemische Energie wird die Energieform bezeichnet, die in Form einer chemischen Verbindung in einem Energieträger gespeichert ist und bei chemischen Reaktionen freigesetzt werden kann.

Im Gegensatz zum bekannten Pulsdetonationsantrieb der Europäischen Patentanmeldung EP 3 146 270 A1 (respektive US 2017/082069 A1) kann die Geschwindigkeit, mit der die Querschnittsfläche der Gesamtheit aller Düsen verändert wird, erhöht werden.

Jede der Teildüsen weist einen Teilventilsitz und einen Teilventilkörper auf, und eine Teil-Düseneintrittsfläche ist durch die Position des Teilventilkörpers bezüglich des Teilventilsitzes bestimmt. Dabei bestimmt das Düsenregelelement die Positionen der Teilventilkörper bezüglich der Teilventilsitze.

Dabei kann jeweils eine Teildüse durch Bewegung des entsprechenden Teilventilkörpers gegen den entsprechenden Teilventilsitz verschliessbar sein. Die Summe der Teil-Düseneintrittsflächen bildet eine Gesamt-Düseneintrittsfläche, und die Summe der Teil-Düsenaustrittsflächen bildet eine Gesamt-Düsenaustrittsfläche.

In Ausführungsformen sind die Teilventilkörper jeweils Teile eines Ventilkörpers. Eine Bewegung des Ventilkörpers bewirkt somit eine Bewegung der Teilventilkörper miteinander, insbesondere eine Bewegung der Teilventilkörper gegen die Teilventilsitze oder von diesen weg. In Ausführungsformen sind die Teilventilsitze jeweils an einem gemeinsamen Ventilsitzkörper ausgebildet.

In Ausführungsformen weisen Öffnungen der Teildüsen konzentrisch zueinander angeordnete ringförmige Öffnungen auf.

In Ausführungsformen weisen die Öffnungen der Teilventile jeweils separate kreisförmige Öffnungen auf. Die Öffnungen können alle dieselbe Grösse respektive denselben Durchmesser aufweisen, oder können unterschiedliche Durchmesser aufweisen. In Ausführungsformen weisen die Öffnungen der Teilventile jeweils separate lineare Öffnungen auf.

In Ausführungsformen weist eine Teildüse jeweils einen Teilventilkörper in Form jeweils einer Regelventilnadel auf, und ist eine Teil-Düseneintrittsfläche der Teildüse durch die Position der Regelventilnadel bezüglich des Teilventilsitzes bestimmt.

In Ausführungsformen weisen die Regelventilnadeln jeweils eine sich zu einer Ventilspitze hin verjüngende Aussenkontur auf, insbesondere eine zumindest annähernd kegelförmige Aussenkontur.

In Ausführungsformen bilden der Teilventilsitz und der Teilventilkörper einen konvergent-divergenten Teil der jeweiligen Teildüse.

In die Brennkammer wird ein fliessfähiger, explosionsfähiger Stoff oder ein fliessfähiges, explosionsfähiges Gemisch, welches durch Vermischung von vorzugsweise an sich nicht explosionsfähigen Komponenten gebildet wird, eingeführt. Die fliessfähigen Stoffe und/oder Stoffgemische sind beispielsweise gasförmig, flüssig, puderförmig, staubförmig oder pulverförmig oder eine Mischung von solchen Komponentenstoffen. Typischerweise ist eine Komponente ein Brennstoff und eine andere Komponente ein Oxidator. Beispielsweise besteht ein Gemisch aus zwei unter Druck stehenden Gasen. Es werden hier und im Folgenden sämtliche Varianten und mögliche Kombinationen von Stoffen und Gemischen vereinfacht "fliessfähiges explosionsfähiges Material" genannt, ohne dass dies als Einschränkung auf einen einzelnen Stoff oder auf ein bestimmtes Gemisch zu verstehen ist.

Bei isochorer Verbrennung unter konstantem Volumen werden höhere Verbrennungstemperaturen erreicht als bei der Verbrennung unter konstantem Druck. Bei explosiver Verbrennung wird zusätzlich eine enorme Drucksteigerung erzielt. Z.B. wird bei einer stöchiometrischen Verbrennung von Luft und Erdgas unter konstantem Volumen ein Druckanstieg um den Faktor 7.5 erzielt, d.h. bei einem Vordruck von 10 bar der Mischung beträgt der Spitzendruck im Explosionsraum ca. 75 bar. Bei solchen Anwendungen mit isochorer Verbrennung ist das Ziel, einen Gasstrahl zu erzeugen, der mit maximaler Geschwindigkeit den Explosionsraum verlässt.

In Ausführungsformen ist die Vorrichtung zum Einsatz mit einem Vordruck, der zwischen dem Umgebungsdruck und dem zwanzigfachen des Umgebungsdrucks liegt vorgesehen, beispielsweise zwischen dem sechsfachen und dem zwölffachen des Umgebungsdrucks.

Gemäss der Erfindung weist die Brennkammer ein veränderbares Volumen auf.

Dadurch ist es möglich, das Volumen der Brennkammer bezüglich eines maximalen Volumens zu reduzieren. Bei einem reduzierten Brennkammervolumen strömt das verbrannte Gemisch im Vergleich zum maximalen Volumen rascher aus. Die verkürzte Ausströmdauer führt dazu, dass der Schub während einer kürzeren Zeitdauer anliegt. Damit reduziert sich der mittlere Schub des Geräts über mehrere Pulse. Gleichzeitig führt das reduzierte Volumen zu einer geringeren Menge des explosionsfähigen Gemisches pro Puls und auch im zeitlichen Mittel.

In Ausführungsformen weist die Vorrichtung eine verschiebbar angeordnete Trennwand auf, welche eine Begrenzung der Brennkammer bildet.

Dadurch kann die Variation des Volumens der Brennkammer in mechanisch einfacher Weise realisiert werden.

In Ausführungsformen bildet die Trennwand eine der Ablassvorrichtung gegenüberliegende Begrenzung der Brennkammer. Insbesondere kann das Stellelement durch die Trennwand geführt sein.

Dadurch kann die Variation des Volumens der Brennkammer in Platz sparender einfacher Weise realisiert werden, und eine rotationssymmetrische Form der Brennkammer unabhängig von der Stellung der Trennwand beibehalten werden.

In Ausführungsformen weist das Stellelement ein Antriebsmittel zum Antrieb einer Öffnungsbewegung der Ablassvorrichtung auf, insbesondere indem das Antriebsmittel durch eine Hilfsexplosionsvorrichtung realisiert ist, in welcher eine Hilfsexplosion eine Kraft, welche die Öffnungsbewegung unterstützt, erzeugt.

Details zum Antrieb mit einer solchen Hilfsexplosionsvorrichtung sind in der eingangs erwähnten EP2319036A2 beschrieben. Insbesondere ist gemäss einer Ausführungsform möglich, die Explosion in der Hilfsexplosionsvorrichtung mit jener in der Explosionsraum mittels einer Leitung, auch Verzögerungsleitung genannt, zu synchronisieren.

Eine weitere Kraft oder Kraftkomponente, welche die Öffnungsbewegung unterstützt, kann durch den Rückstoss der ausströmenden Explosionsgase gegen das Stellelement entstehen.

In einer Ausführungsform ist das Stellelement dazu eingerichtet, die Ablassvorrichtung zeitweise gänzlich zu verschliessen. Damit ist es möglich, den Druck im Explosionsraum vor der Zündung über den Umgebungsdruck zu erhöhen.

In Ausführungsformen weist die Vorrichtung eine Verdichtungsvorrichtung zum Verdichten des fliessfähigen explosionsfähigen Materials oder mindestens einer der Komponenten des explosionsfähigen Materials auf.

Dadurch kann der Druck des explosionsfähigen Materials vor der Zündung bezüglich des Umgebungsdrucks erhöht werden. Der mit der Explosion erzeugte Druck ist eine

Funktion dieses Drucks vor der Zündung und wird damit auch entsprechend erhöht. Damit kann auch der mit der Vorrichtung erzeugte Schub erhöht werden.

In Ausführungsformen ist die Vorrichtung die Verdichtungsvorrichtung ein kontinuierlich arbeitender Verdichter, insbesondere ein rotierender Verdichter, beispielsweise ein Turboverdichter.

Der Verdichter kann ein rotierender Verdichter sein, insbesondere ein Turboverdichter.

In Ausführungsformen ist die Vorrichtung der Verdichter durch eine Turbine angetrieben, und ist die Turbine angeordnet, durch einen Abgasstrahl aus einer Turbinenbrennkammer angetrieben zu werden, wobei die Turbinenbrennkammer von der Brennkammer verschieden ist.

Mit anderen Worten sind dabei der Verdichter, die Turbine und die Turbinenbrennkammer Teile einer Gasturbine. Die Gasturbine wird verwendet, um den Verdichter zu betreiben. Die Turbine respektive die Turbinenbrennkammer kann mit demselben Brennstoff wie die Brennkammer betrieben werden. Das explosionsfähige Material kann also dasselbe Gemisch sein wie in der Brennkammer, aber mit einem anderen Mischungsverhältnis.

In Ausführungsformen ist der Verdichter durch eine Turbine angetrieben, und ist die Turbine angeordnet, durch Abgase der Brennkammer angetrieben zu werden.

Im Gegensatz zu der Topologie mit einer separaten Gasturbine wird hier also der Strom der Abgase der PE zum Antrieb des Verdichters genutzt. Dies vereinfacht die Vorrichtung, und vergrössert, dank dem generell besseren Wirkungsgrad der PE im Vergleich zu einer konventionellen Gasturbine, den Gesamtwirkungsgrad der Vorrichtung.

In Ausführungsformen weist die Vorrichtung einen Abtrieb zur Abgabe von mechanischer Arbeit an einen mechanischen Verbraucher auf.

In Ausführungsformen weist die Vorrichtung einen Abtrieb zur Abgabe von mechanischer Arbeit an eine Strömungsmaschine auf. Diese kann ein Propeller, zum Antrieb eines Fahrzeugs, insbesondere eines Flugzeugs, sein.

In Ausführungsformen weist die Vorrichtung einen Abtrieb zur Abgabe von mechanischer Arbeit an einen Generator auf. Damit kann die mechanische Arbeit in elektrische Energie umgewandelt werden.

In Ausführungsformen weist die Vorrichtung eine Verdichtungsvorrichtung in Form eines Lufteinlasses auf, zur Verdichtung einströmender Luft bei Überschallgeschwindigkeit der Vorrichtung bezüglich Umgebungsluft.

Eine solche Verdichtungsvorrichtung kann alternativ oder zusätzlich zu einem Verdichter vorliegen. Damit kann insbesondere bei einem Flugzeug die Verdichtung in einem Verdichter bei Erreichen von Überschallgeschwindigkeit durch die Verdichtung im Lufteinlass ersetzt werden.

In Ausführungsformen ist die Ablassvorrichtung dazu eingerichtet, bei einem Ausströmen von Explosionsgasen durch die Ablassvorrichtung ein Flächenverhältnis zwischen einer Gesamt-Düseneintrittsfläche und einer Gesamt-Düsenaustrittsfläche der Ablassvorrichtung einzustellen, welches mindestens annähernd einem idealen Flächenverhältnis zur Erzeugung einer maximalen Austrittsgeschwindigkeit der Explosionsgase in Abhängigkeit des Drucks in der Brennkammer folgt.

Dies wird realisiert, indem das Düsenregelelement zur Variation einer Gesamt-Düseneintrittsfläche, welche die Summe der Teil-Düseneintrittsflächen ist, angeordnet ist. Dabei ist Stellelement dazu eingerichtet, eine Bewegung des Düsenregelelementes zum Einstellen der Gesamt-Düseneintrittsfläche mindestens annähernd entsprechend dem genannten idealen Flächenverhältnis zu steuern.

In Ausführungsformen weist die Vorrichtung eine Stelleinrichtung ein Antriebsmittel zum Antrieb einer Öffnungsbewegung des Düsenregelelementes auf, insbesondere indem das Antriebsmittel durch eine Hilfsexplosionsvorrichtung mit einer Hilfsbrennkammer realisiert ist, in welcher eine Hilfsexplosion eine Kraft, welche die Öffnungsbewegung unterstützt, erzeugt.

In Ausführungsformen weist die Stelleinrichtung ein Bremsmittel zum Verzögern einer Öffnungsbewegung des Regelventils auf, insbesondere indem das Bremsmittel durch eine Gasdruckfeder oder durch eine Nockenwelle oder durch eine Gasdruckfeder in Kombination mit einer Nockenwelle realisiert ist.

In Ausführungsformen ist das Düsenregelelement dazu eingerichtet, die Ablassöffnung zeitweise gänzlich zu verschliessen.

Das **Verfahren** zum wiederholten Erzeugen von Explosionen und zum Umsetzen von chemischer Energie in kinetische Energie von ausströmenden Abgasen der Explosionen, insbesondere zum Erzeugen von Schub zum Antrieb eines Luftfahrzeuges, weist die wiederholte Ausführung der folgenden Schritte auf:
- Zuführen eines fliessfähigen explosionsfähigen Materials oder von Komponenten, die bei Vermischung ein explosionsfähiges Material bilden, in eine Brennkammer, wobei eine Ablassvorrichtung der Brennkammer mittels eines beweglichen Düsenregelelementes zumindest teilweise verschlossen ist, und Erzeugen eines Überdrucks in der Brennkammer bezüglich eines Umgebungsdrucks;
- Öffnen der Ablassvorrichtung;
- Zünden des explosionsfähigen Materials in der Brennkammer;
- Abführen von Explosionsgasen durch die Ablassvorrichtung;
- zumindest teilweises Verschliessen der Ablassvorrichtung mittels des beweglichen Düsenregelelementes.
Dabei werden
- zum Öffnen der Ablassvorrichtung und beim Abführen von Explosionsgasen mehrere Teildüsen synchron zueinander geöffnet.
- zum zumindest teilweises Verschliessen der Ablassvorrichtung mehrere Teildüsen synchron zueinander zumindest teilweise geschlossen.

In Ausführungsformen werden Teilschritte «Öffnen der Ablassvorrichtung», «Zünden des explosionsfähigen Materials in der Brennkammer» und «Abführen von Explosionsgasen durch die Ablassvorrichtung mittels des beweglichen Düsenregelelementes» zeitlich überlappend durchgeführt.

Gemäss der Erfindung weisen die Teildüsen jeweils Teilventilsitze und Teilventilkörper auf, und in Ausführungsformen werden die Teilventilkörper bezüglich der Teilventilsitze synchron zueinander durch das Düsenregelelement bewegt.

Weitere bevorzugte Ausführungsformen gehen aus den abhängigen Patentansprüchen hervor.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine Pulsantriebsmaschine oder Pulse Engine (PE);
- Figur 2: eine Betriebsart der PE mit variablem Volumen ihrer Brennkammer;
- Figur 3: eine Betriebsart mit variabler Betriebsfrequenz
- Figur 4: Vergrösserung einer Öffnungsgeschwindigkeit durch Verwendung mehrerer Teildüsen mit einzelnen Düsenöffnungen;
- Figur 5: verschiedene Düsenkörper mit jeweils mehreren Düsenöffnungen;
- Figur 6: eine PE mit Aufladung durch eine separate Gasturbine;
- Figur 7: eine PE mit Aufladung mittels einer durch Abgase der PE angetriebene Turbine;
- Figur 8: eine PE mit einem durch die Turbine angetriebene Luftschraube; und
- Figur 9: eine PE mit einem durch die Turbine angetriebenen Generator.

Grundsätzlich sind in den Figuren gleiche oder gleich wirkende Teile mit gleichen Bezugszeichen versehen.

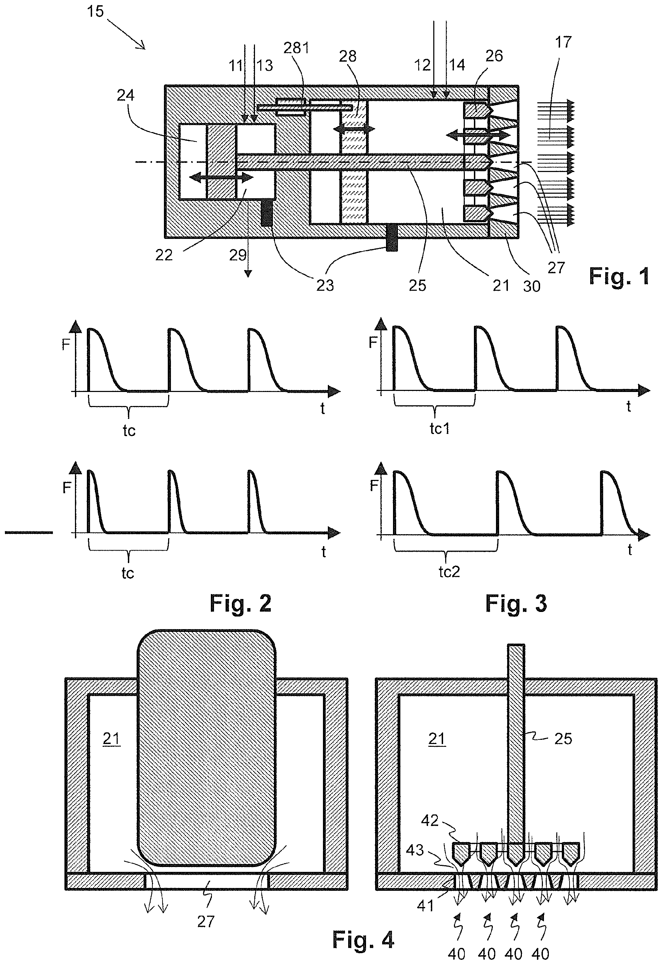

**Figur** 1 zeigt eine Vorrichtung zum wiederholten Erzeugen von Explosionen, im Folgenden auch Pulsantriebsmaschine oder PE (pulse engine) 15 genannt: Eine Brennkammer 21 oder Explosionsraum ist über eine Füllvorrichtung mit einem fliessfähigen explosionsfähigen Material befüllbar, beispielsweise einem explosiven Gasgemisch. Die Füllvorrichtung weist dazu einen Brennkammerlufteinlass 12 zur Zufuhr eines Oxidationsmittels, beispielsweise Luft, und einen Brennkammerbrennstoffeinlass 14 zur Zufuhr eines Brennstoffes oder Treibstoffes, beispielsweise Wasserstoff auf. Das daraus gebildete fliessfähige explosionsfähige Material kann mit einer Zündvorrichtung, beispielsweise einer Zündkerze 23, gezündet und zur Explosion gebracht werden.

Ein Austritt der Brennkammer 21 für Abgase 17 führt durch Düsenöffnungen 27. Die Düsenöffnungen 27 sind mittels Düsenregelelementen 26 eines Stellelementes 25 verschliessbar. In einer Neutralstellung sind die Düsenöffnung 27 durch das Stellelement 25 verschlossen. Das Stellelement 25 wird dabei mittels einer Gasfeder 24 in dieser Stellung gehalten.

Während des Füllens der Brennkammer 21 dichtet das Düsenregelelement 26 die Brennkammer 21 gegen die Düsenöffnungen 27 ab. Dadurch kann ein Vordruck mit Überdruck erzeugt werden, mit dem wiederum ein hoher Explosionsdruck erzeugbar ist.

Eine Hilfsbrennkammer 22 ist über eine weitere Füllvorrichtung mit einem Hilfsbrennkammerlufteinlass 11 und einem Hilfsbrennkammerbrennstoffeinlass 13 ebenfalls mit explosionsfähigem Material befüllbar. Mittels einer Explosion in der Hilfsbrennkammer 22 ist das Stellelement 25 entgegen dem Druck der Gasfeder 24 bewegbar und dadurch die Düsenöffnung 27 öffenbar.

Im Betrieb der PE 15 können die Hilfsbrennkammer 22 und die Brennkammer 21 jeweils mit dem gleichen explosionsfähigen Material befüllt werden. Grundsätzlich können auch unterschiedliche Materialien oder unterschiedliche Mischungen in den beiden Brennkammern eingesetzt werden. Zuerst wird das explosionsfähige Material in der Hilfsbrennkammer 22 mittels einer zugeordneten Zündkerze 23 gezündet. Dadurch erhöht sich der Druck in der Hilfsbrennkammer 22 und das Stellelement 25 beginnt sich zu bewegen und beginnt so, die Düsenöffnung 27 der Brennkammer 21 freizugeben. Danach wird das explosionsfähige Material in der Brennkammer 21 gezündet, beispielsweise mit einer weiteren Zündkerze 23.

Die Zündkerzen 23 der Hilfsbrennkammer 22 und der Brennkammer 21 werden also kurz nacheinander gezündet. Eine Verzögerung zwischen den beiden Zündzeitpunkten kann so gewählt werden, dass eine Austrittsgeschwindigkeit der Abgase 17 oder eine Gesamtenergie, welche in kinetische Energie der Abgase 17 umgesetzt wird, maximiert wird.

In einer anderen Ausführungsform wird das Material in der Brennkammer 21, über eine ebenfalls mit explosionsfähigem Material gefüllte Leitung oder Verzögerungsleitung, durch eine von einer Hilfsexplosionskammer 22 ausgehende und durch die Verzögerungsleitung geführte Explosion gezündet.

Die Befüllung der Brennkammern (Brennkammer 21 und Hilfsbrennkammer 22) kann jeweils gestuft und in folgender Reihenfolge geschehen zuerst der Oxidant, durch den Brennkammerlufteinlass 12 respektive den Hilfsbrennkammerlufteinlass 11, dann der Brennstoff durch den Brennkammerbrennstoffeinlass 14 respektive den Hilfsbrennkammerbrennstoffeinlass 13. Damit kann die jeweilige Brennkammerwand während des Befüllens mit dem Oxidant gekühlt werden, ohne dass sich ein Gemisch an der Brennkammerwand entzünden könnte. Die somit geschaffene Kühlmöglichkeit ermöglicht es, die Zyklusfrequenz zu maximieren. Damit lässt sich die Leistungsdichte, also den möglichen Schub pro Brennkammervolumen, maximieren.

Für weitere Elemente der Konstruktion und Verfahrensaspekte für den Betrieb der Vorrichtung wird auf die eingangs genannte EP 3 146 270 A1 verwiesen, deren Inhalt hiermit in die vorliegende Anmeldung aufgenommen wird.

Die Brennkammer 21 weist eine Trennwand 28 auf, welche einen Abschnitt der Gesamtheit der Wände der Brennkammer 21 bildet. Durch Verschieben der Trennwand 28 ist das Volumen der Brennkammer 21 veränderbar. Die Trennwand 28 kann durch eine schematisch dargestellte Verstelleinrichtung 281 verschoben und damit das Volumen variiert werden. In der Figur 1 ist beispielhaft die Trennwand 28 in die gleiche Richtung bewegbar, entlang der sich das Stellelement 25 hin und her bewegt.

**Figur 2** zeigt eine Betriebsart der PE 15 mit variablem Volumen ihrer Brennkammer, jeweils mit einem zeitlichen Verlauf eines durch die PE 15 erzeugten Schubes F: Im oberen Verlauf mit einem grösseren und im unteren Verlauf mit einem kleineren Volumen der Brennkammer, jedoch mit gleichbleibender Pulsperiode tc. Beim reduzierten Brennkammervolumen strömt, im Vergleich zum grösseren Volumen, das verbrannte Gemisch rascher aus. Die verkürzte Ausströmdauer führt dazu, dass der Schub während einer kürzeren Zeitdauer anliegt. Somit reduziert sich auch der mittlere Schub der PE 15 über die Zeit. Durch das geringere Volumen reduziert sich auch der Verbrauch an Brennstoff und Oxidator pro Puls wie auch im zeitlichen Mittel.

**Figur 3** zeigt eine Betriebsart der PE 15 mit variabler Betriebsfrequenz, im oberen Verlauf mit einer grösseren Betriebsfrequenz (respektive kleineren Pulsperiode tc1) und im unteren Verlauf mit einer kleineren Betriebsfrequenz (respektive grösseren Pulsperiode tc2). Dabei wird lediglich die Anzahl Schubpulse pro Zeiteinheit reduziert, während die Pulse an sich gleich gehalten werden, d.h. mit dem gleichen Volumen. Auch dadurch reduzieren sich der Schub und der Verbrauch im zeitlichen Mittel.

Im Betrieb können sowohl das Volumen als auch die Betriebsfrequenz variiert werden. Damit kann der gleiche mittlere Schub mit unterschiedlichen Kombinationen von Volumen und Betriebsfrequenz erreicht werden und der Betrieb optimiert werden. Beispielsweise kann die Stöchiometrie der Mischung damit variiert werden. Beispielsweise können schnelle Lastwechsel durch Anpassen der Betriebsfrequenz und anschliessend bei konstanter Last durch langsames Anpassen des Volumens bei gleichzeitiger Kompensation durch die Betriebsfrequenz gefolgt werden. Bei einer Optimierung kann berücksichtigt werden, dass mit einer Schubregelung über die Betriebsfrequenz die einzelnen Pulse alle von einen bestimmten optimierten zeitlichen Verlauf oder Pulstyp sein können. Ein grosses Volumen ist bezüglich des Verhältnisses von Oberfläche zu Volumen gegenüber einem kleinen Volumen im Vorteil bezüglich der Wärmeverluste. Beim Antrieb einer Abgasturbine liegt ein zusätzlicher Freiheitsgrad bei der Wahl eines Betriebszustandes vor: Je nachdem, wie sich der Wirkungsgrad der Abgasturbine als Funktion von PE-Frequenz und PE-Volumen verhält, kann es vorteilhaft sein, wenn im Teillastbereich das PE-Volumen reduziert werden kann.

**Figur 4** zeigt Vergrösserung einer Öffnungsgeschwindigkeit durch Verwendung mehrerer Teildüsen mit einzelnen Düsenöffnungen. Links ist schematisch eine Düse mit einer einzelnen Düsenöffnung 27 gezeigt, rechts eine Düse mit mehreren Teildüsen 40. Jede der Teildüsen 40 weist einen Teilventilsitz 41 und einen Teilventilkörper 42 auf. Der Teilventilkörper 42 kann am Teilventilsitz 41 anliegen und so die Teildüse 40 verschliessen, und zum Öffnen der Teildüse 40 von Teilventilsitz 41 weg bewegt werden. Die Teilventilkörper 42 können gemeinsam, d.h. synchron durch das Stellelement 25 bewegt werden, beispielsweise indem die 42e am selben Körper ausgebildet sind, oder alle miteinander starr am Stellelement 25 oder einer gemeinsamen Stelleinrichtung befestigt sind. Beim Bewegen der Teilventilkörper 42 von den Teilventilsitzen 41 weg wird mit dem gleichen Hub der Ventilkörper respektive des Stellelementes 25 eine grössere Querschnittfläche freigegeben, als bei der Verwendung von nur einer Düse. Damit ist auch eine zeitliche Änderung einer gesamten Querschnittsfläche aller Teildüsen 40 grösser als bei Verwendung nur einer einzelnen Düse. Indem also die Düsenöffnung 27 aus mehreren einzelnen Teildüsen besteht, kann die Geschwindigkeit, mit welcher die Düsenöffnung 27 geöffnet wird und eine grössere Querschnittsfläche freigegeben wird, erhöht werden, ohne dass das Stellelement 25 schneller bewegt werden muss.

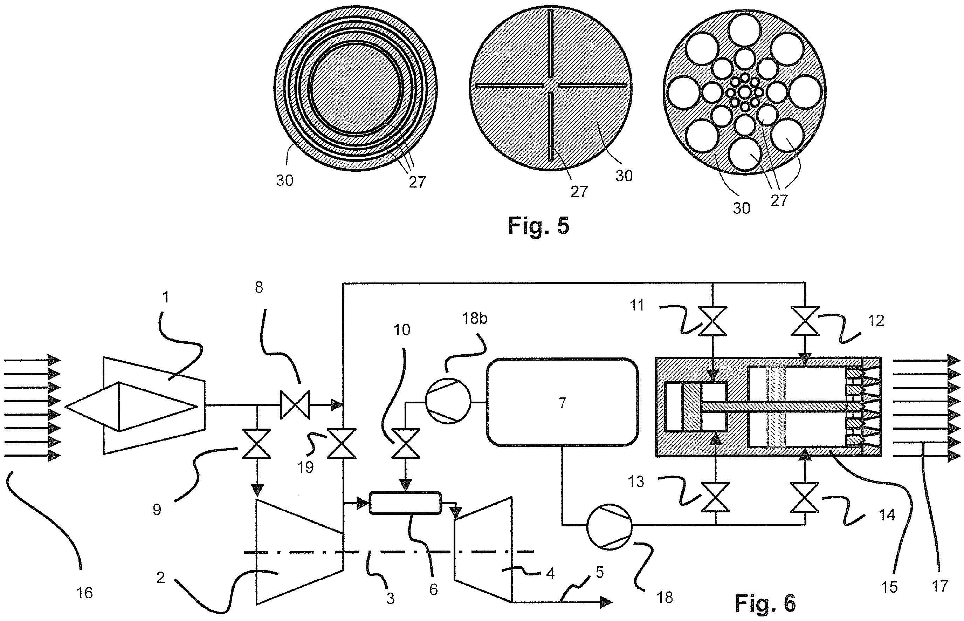

Die mehreren Teildüsen 40 respektive die Düsenöffnungen 27 können verschieden geformt sein. **Figur 5** zeigt verschiedene Düsenkörper 30 mit jeweils mehreren Düsenöffnungen 27, angeordnet als konzentrische Ringe, radiale lineare Strahlen und als kreisrunde Öffnungen mit verschiedenen Durchmessern. In anderen Ausführungsformen weisen die kreisrunden Öffnungen alle denselben Durchmesser auf (nicht dargestellt).

**Figur 6** zeigt eine PE 15 mit Aufladung durch eine separate Gasturbine. Darin wird Treibstoff oder Brennstoff von einem Brennstofftank 7 über eine Treibstofffördervorrichtung 18 und über Treibstoffeinlassventile (Hilfsbrennkammerbrennstoffeinlass 13 und Brennkammerbrennstoffeinlass 14) zur Brennkammer 21 und Hilfsbrennkammer 22 der PE 15 transportiert. Eine weitere Treibstofffördervorrichtung 18b fördert den Treibstoff via ein Turbinenbrennkammerspeiseventil 10 zu einer Turbinenbrennkammer 6, die kontinuierlich (also nicht pulsierend) betrieben wird und über eine Turbine 4 und eine Welle 3 einen Verdichter 2 antreibt. Dieser Verdichter 2 wird von Luft aus einem Lufteinlass 1 gespeist, verdichtet die Luft und leitet sie über die Lufteinlassventile (Hilfsbrennkammerlufteinlass 11 und Brennkammerlufteinlass 12) in die Brennkammern 21, 22.

Der Verdichter 2 kann ein Radialverdichter oder Axialverdichter sowie einstufig oder mehrstufig sein. Die Turbine 4 und die weitere Turbine 4b können einstufig oder mehrstufig sein.

Im Lufteinlass 1 kann die Luft durch Staudruckverdichtung bereits vorverdichtet werden. Diese (Vor)Verdichtung ist umso höher, je höher die Machzahl der einströmenden Luft 16. Weil die Luft bei hinreichend hohen Machzahlen im Lufteinlass 1 bereits genügend verdichtet wird, ist der Verdichter 2 bei diesen Machzahlen überflüssig. Bei Machzahlen, bei denen der Verdichter 2 benötigt wird, ist ein Bypassventil 8 geschlossen und ein Verdichtereinlassventil 9 offen. Wenn der Verdichter aufgrund der hohen Geschwindigkeit der einströmenden Luft 16 nicht mehr gebraucht wird, wird das Verdichtereinlassventil 9 geschlossen und das Bypassventil 8 geöffnet. Dadurch wird der Verdichter 2 überbrückt. In diesem Fall wird auch ein Verdichterauslassventil 19 geschlossen.

Mit den ausströmenden Abgasen 17 der PE 15 respektive dem dadurch erzeugten Schub kann ein Fahrzeug, insbesondere ein Flugzeug angetrieben werden.

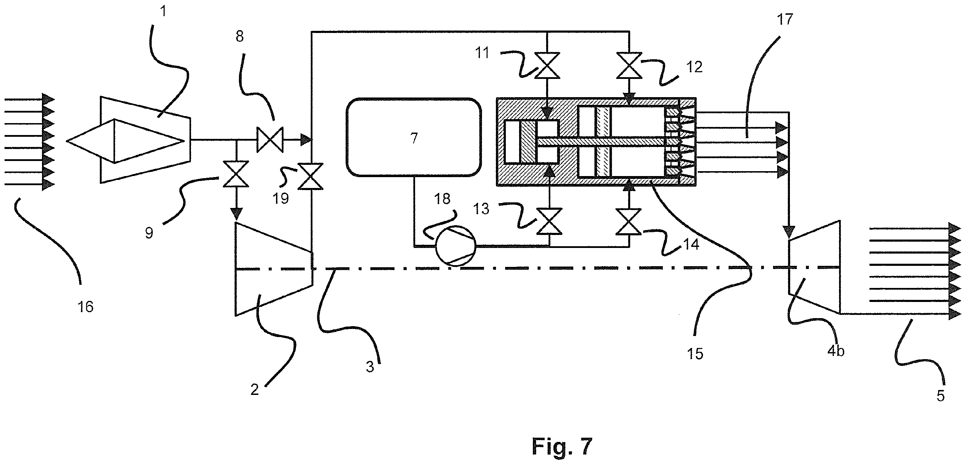

**Figur 7** zeigt eine PE 15 mit Aufladung mittels einer durch Abgase der 17 der PE 15 über eine gemeinsame Welle 3 angetriebene weitere Turbine 4b: Anstatt mit einer separaten Gasturbine als Hilfsaggregat kann der Verdichter 2 auch über eine Turbine 4b angetrieben werden, die von den Abgasen 17 aus der PE 15 angetrieben wird. In diesem Fall kann auf die weitere Treibstofffördervorrichtung 18b sowie auf die Turbinenbrennkammer 6 verzichtet werden.

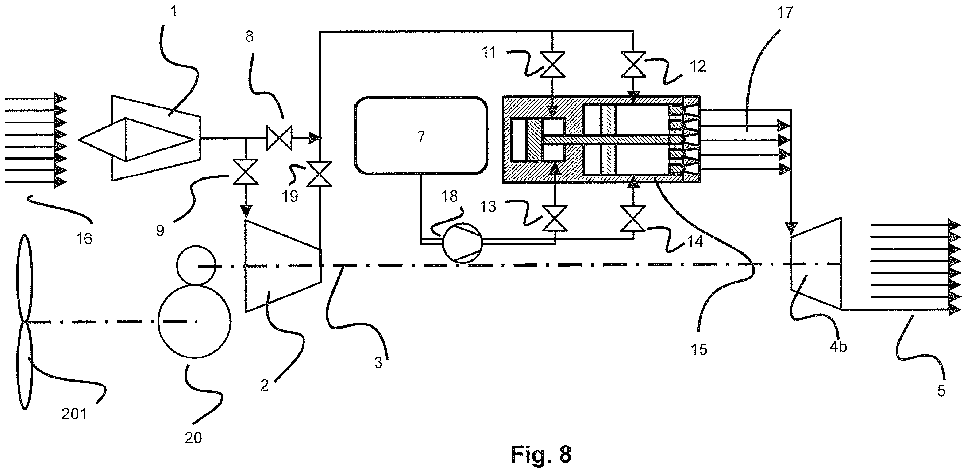

**Figur 8** zeigt eine PE 15 in welcher die durch die Abgase der 17 der PE 15 angetriebene weitere Turbine 4b eine Luftschraube oder einen Propeller 201 antreibt, insbesondere über ein Untersetzungsgetriebe 20. Bei dieser Luftschraube kann es sich um eine ummantelte, oder eine nicht ummantelte Ausführung handeln. Die Luftschraube dient, wie zu einem Propellerturbinenluftstrahltriebwerk (Turboprop) zum Antrieb eines Fahrzeuges, insbesondere Flugzeuges. Ein Abgasstrahl 5 der weiteren Turbine 4b kann ebenfalls zum Antrieb beitragen.

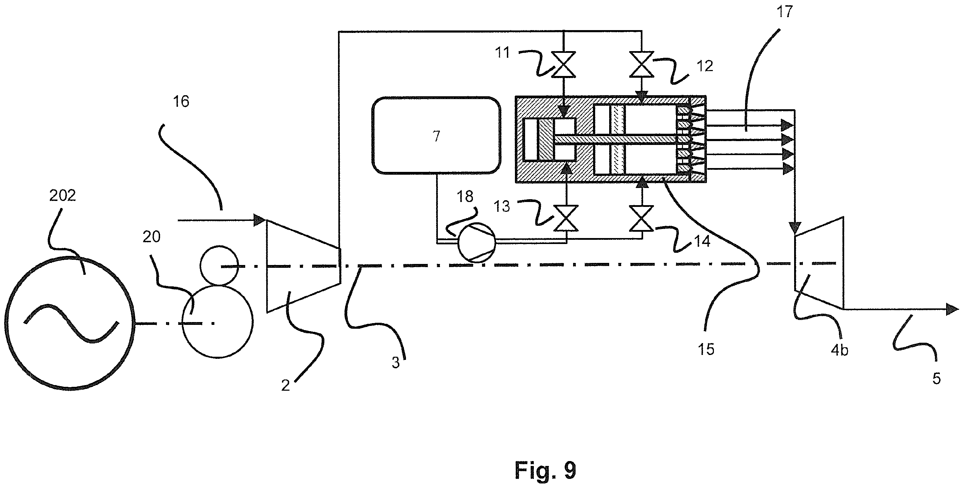

**Figur 9** zeigt eine PE 15 in welcher die durch die Abgase der 17 der PE 15 angetriebene weitere Turbine 4b einen Generator 202 antreibt. Nach Bedarf kann ein Untersetzungsgetriebe 20 zwischen der Welle 3 und dem Generator 202 angeordnet sein.

## Patentansprüche

1. Pulsantriebsmaschine zum wiederholten Erzeugen von Explosionen und zum Umsetzen von chemischer Energie in kinetische Energie von ausströmenden Abgasen der Explosionen, insbesondere zum Erzeugen von Schub zum Antrieb eines Luftfahrzeuges, aufweisend
• eine Brennkammer (21),
• mindestens eine Zufuhrleitung zum Zuführen eines fliessfähigen explosionsfähigen Materials oder von Komponenten, die bei Vermischung ein explosionsfähiges Material bilden, zur Brennkammer (21);
• eine Ablassvorrichtung zum gerichteten Ablassen eines durch Zündung des explosionsfähigen Materials im in der Brennkammer (21) erzeugten Gasdrucks,
• ein bewegliches Düsenregelelement (26) zum teilweisen oder gänzlichen Verschliessen der Ablassvorrichtung,
• ein Stellelement (25), welches dazu ausgebildet ist, nach einem Öffnen der Ablassvorrichtung und während eines Ausströmens von Explosionsgasen durch die Ablassvorrichtung die Ablassvorrichtung weiter zu öffnen und dabei das optimale, ideale Flächenverhältnis zwischen Düsenaustrittsfläche und Düseneintrittsfläche zumindest annähernd einzustellen,
**dadurch gekennzeichnet, dass** die Brennkammer (21) ein veränderbares Volumen aufweist und dass die Ablassvorrichtung mehrere Teildüsen (40)
zum Ablassen des Gasdrucks aufweist, und eine Stellung der Teildüsen (40) durch das Stellelement (25) einstellbar ist,
und mit der Summe der Teildüsen (40) eine Düse realisiert ist, welche gewährleistet, dass während einer gesamten Ausströmzeit immer das optimale,
ideale Flächenverhältnis zwischen Düsenaustrittsfläche und Düseneintrittsfläche zumindest annähernd eingestellt wird,
wobei jede der Teildüsen (40) einen Teilventilsitz (41) und einen Teilventilkörper (42) aufweist, und eine Teil-Düseneintrittsfläche (43) durch die Position des Teilventilkörpers (42) bezüglich des Teilventilsitzes (41) bestimmt ist, wobei das Düsenregelelement (26) die Positionen der Teilventilkörper (42) bezüglich der Teilventilsitze (41) bestimmt,
und so das Düsenregelelement (26) zur Variation einer Gesamt-Düseneintrittsfläche, welche die Summe der Teil-Düseneintrittsflächen (43) ist, angeordnet ist, wobei das Stellelement (25) dazu eingerichtet ist, eine Bewegung des Düsenregelelementes (26) zum Einstellen der Gesamt-Düseneintrittsfläche mindestens annähernd entsprechend dem genannten idealen Flächenverhältnis zu steuern.

2. Pulsantriebsmaschine gemäss Anspruch 1, wobei Öffnungen der Teildüsen (40) konzentrisch zueinander angeordnete ringförmige Öffnungen aufweisen.

3. Pulsantriebsmaschine gemäss einem der Ansprüche 1 oder 2, aufweisend eine verschiebbar angeordnete Trennwand (28), welche eine Begrenzung der Brennkammer (21) bildet.

4. Pulsantriebsmaschine gemäss Anspruch 3, in welcher die Trennwand (28), eine der Ablassvorrichtung gegenüberliegende Begrenzung der Brennkammer (21) bildet, und insbesondere das Stellelement (25) durch die Trennwand (28) geführt ist.

5. Pulsantriebsmaschine gemäss einem der Ansprüche 1 bis 4, aufweisend eine Verdichtungsvorrichtung (1), (2) zum Verdichten des fliessfähigen explosionsfähigen Materials oder einer mindestens einer der Komponenten des explosionsfähigen Materials.

6. Pulsantriebsmaschine gemäss Anspruch 5, wobei die Verdichtungsvorrichtung einen kontinuierlich arbeitenden Verdichter (2) umfasst, insbesondere einen rotierenden Verdichter, beispielsweise einen Turboverdichter.

7. Pulsantriebsmaschine gemäss Anspruch 6, aufweisend eine Turbine (4), wobei der Verdichter (2) durch die Turbine (4) angetrieben ist, und die Turbine (4) angeordnet ist, durch einen Abgasstrahl (5) aus einer Turbinenbrennkammer (6) angetrieben zu werden, wobei die Turbinenbrennkammer (6) von der Brennkammer (21) verschieden ist.

8. Pulsantriebsmaschine gemäss Anspruch 6, aufweisend eine Turbine (4), wobei der Verdichter (2) durch die Turbine (4) angetrieben ist, und die Turbine (4) angeordnet ist, durch Abgase (17) der Brennkammer (21) angetrieben zu werden.

9. Pulsantriebsmaschine gemäss Anspruch 8, aufweisend einen Abtrieb zur Abgabe von mechanischer Arbeit an einen mechanischen Verbraucher, insbesondere an mindestens einem von
• einer Strömungsmaschine, insbesondere einen Propeller, zum Antrieb eines Fahrzeugs, insbesondere eines Flugzeugs.
• einem Generator zur Wandlung in elektrische Energie.

10. Pulsantriebsmaschine gemäss einem der Ansprüche 5 bis 9, aufweisend eine Verdichtungsvorrichtung in Form eines Lufteinlasses (1), zur Verdichtung einströmender Luft bei Überschallgeschwindigkeit der Pulsantriebsmaschine bezüglich Umgebungsluft.

11. **Verfahren** für eine Pulsantriebsmaschine zum wiederholten Erzeugen von Explosionen und zum Umsetzen von chemischer Energie in kinetische Energie von ausströmenden Abgasen der Explosionen, insbesondere zum Erzeugen von Schub zum Antrieb eines Luftfahrzeuges, mit der wiederholten Ausführung der folgenden Schritte:
• Zuführen eines fliessfähigen explosionsfähigen Materials oder von Komponenten, die bei Vermischung ein explosionsfähiges Material bilden, in eine Brennkammer (21), wobei eine Ablassvorrichtung der Brennkammer (21) mittels eines beweglichen Düsenregelelementes (26) zumindest teilweise verschlossen ist und Erzeugen eines Überdrucks in der Brennkammer (21) bezüglich eines Umgebungsdrucks;
• Öffnen der Ablassvorrichtung;
• Zünden des explosionsfähigen Materials in der Brennkammer (21);
• Abführen von Explosionsgasen durch die Ablassvorrichtung;
• zumindest teilweises Verschliessen der Ablassvorrichtung mittels des beweglichen Düsenregelelementes (26); und
• dabei zumindest annäherndes Einstellen des optimalen, idealen Flächenverhältnisses zwischen Düsenaustrittsfläche und Düseneintrittsfläche; **dadurch gekennzeichnet, dass** die Brennkammer (21) ein veränderbares Volumen aufweist und dass
• zum Öffnen der Ablassvorrichtung und beim Abführen von Explosionsgasen mehrere Teildüsen (40) synchron zueinander geöffnet werden;
• zum zumindest teilweisen Verschliessen der Ablassvorrichtung mehrere Teildüsen (40) synchron zueinander zumindest teilweise geschlossen werden;
• und mit der Summe der Teildüsen (40) eine Düse realisiert ist, welche gewährleistet, dass während einer gesamten Ausströmzeit immer das optimale, ideale Flächenverhältnis zwischen Düsenaustrittsfläche und Düseneintrittsfläche zumindest annähernd eingestellt wird,
• wobei jede der Teildüsen (40) einen Teilventilsitz (41) und einen Teilventilkörper (42) aufweist, und eine Teil-Düseneintrittsfläche (43) durch die Position des Teilventilkörpers (42) bezüglich des Teilventilsitzes (41) bestimmt ist, wobei das Düsenregelelement (26) die Positionen der Teilventilkörper (42) bezüglich der Teilventilsitze (41) bestimmt,
• und so das Düsenregelelement (26) eine Gesamt-Düseneintrittsfläche variiert, welche die Summe der Teil-Düseneintrittsflächen (43) ist, wobei das Stellelement (25) eine Bewegung des Düsenregelelementes (26) zum Einstellen der Gesamt-Düseneintrittsfläche mindestens annähernd entsprechend dem genannten idealen Flächenverhältnis steuert.

12. Verfahren gemäss Anspruch 11, wobei die Teilschritte «Öffnen der Ablassvorrichtung», «Zünden des explosionsfähigen Materials in der Brennkammer» und «Abführen von Explosionsgasen durch die Ablassvorrichtung mittels des beweglichen Düsenregelelementes» zeitlich überlappend durchgeführt werden.

13. Verfahren gemäss Anspruch 11 oder 12, wobei die Teildüsen (40) jeweils Teilventilsitze (41) und Teilventilkörper (42) aufweisen, und die Teilventilkörper (42) bezüglich der Teilventilsitze (41) synchron zueinander durch das Düsenregelelement (26) bewegt werden.

## Claims

1. Pulse propulsion machine for repeatedly generating explosions and for converting chemical energy into kinetic energy from outflowing exhaust gases of the explosions, in particular for generating thrust for propulsion of an aircraft, comprising
• a combustion chamber (21),
• at least one supply line for supplying a flowable explosive material or components, which form an explosive material when mixed, to the combustion chamber (21);
• a discharge device for the directed discharge of a gas pressure generated by ignition of the explosive material in the combustion chamber (21),
• a movable nozzle control element (26) for partially or completely closing the discharge device,
• an adjusting element (25) which is configured to continue to open the discharge device after the discharge device has been opened and during an outflow of explosion gases through the discharge device and thereby to set at least approximately the optimum, ideal area ratio between the nozzle outlet area and the nozzle inlet area,
**characterized in that** the combustion chamber (21) has a variable volume and **in that** the discharge device has a plurality of partial nozzles (40) for releasing the gas pressure, and a position of the partial nozzles (40) is adjustable by the adjusting element (25),
and with the sum of the partial nozzles (40), a nozzle is realized which ensures that the optimum, ideal area ratio between the nozzle outlet area and the nozzle inlet area is always at least approximately adjusted during an entire discharge time,
wherein each of the partial nozzles (40) has a partial valve seat (41) and a partial valve body (42), and a partial nozzle inlet area (43) is determined by the position of the partial valve body (42) with respect to the partial valve seat (41), wherein the nozzle control element (26) determines the positions of the partial valve bodies (42) with respect to the partial valve seats (41),
and thus the nozzle control element (26) is arranged to vary a total nozzle entry area, which is the sum of the partial nozzle entry areas (43), wherein the adjusting element (25) is configured to control a movement of the nozzle control element (26) to adjust the total nozzle entry area at least approximately in accordance with said ideal area ratio.

2. Pulse propulsion machine according to claim 1, wherein openings of the partial nozzles (40) have ring-shaped openings arranged concentrically to one another.

3. Pulse propulsion machine according to one of claims 1 or 2, comprising a displaceably arranged partition wall (28) which forms a boundary of the combustion chamber (21).

4. Pulse propulsion machine according to claim 3, in which the partition wall (28) forms a boundary of the combustion chamber (21) opposite the discharge device, and in particular the adjusting element (25) is guided through the partition wall (28).

5. Pulse propulsion machine according to any one of claims 1 to 4, comprising a compression device (1), (2) for compressing the flowable explosive material or at least one of the components of the explosive material.

6. Pulse propulsion machine according to claim 5, wherein the compression device comprises a continuously operating compressor (2), in particular a rotating compressor, for example a turbo compressor.

7. Pulse propulsion machine according to claim 6, comprising a turbine (4), wherein the compressor (2) is driven by the turbine (4), and the turbine (4) is arranged to be driven by an exhaust gas jet (5) from a turbine combustion chamber (6), wherein the turbine combustion chamber (6) is different from the combustion chamber (21).

8. Pulse propulsion machine according to claim 6, comprising a turbine (4), wherein the compressor (2) is driven by the turbine (4), and the turbine (4) is arranged to be driven by exhaust gases (17) of the combustion chamber (21).

9. Pulse propulsion machine according to claim 8, comprising an output for delivering mechanical work to a mechanical consumer, in particular at at least one of
• of a turbomachine, in particular a propeller, for driving a vehicle, in particular an aircraft.
• a generator for conversion into electrical energy.

10. Pulse propulsion machine according to any one of claims 5 to 9, comprising a compression device in the form of an air inlet (1) for compressing incoming air at supersonic speed of the pulse propulsion machine with respect to ambient air.

11. **Method** for a pulse propulsion machine for repeatedly generating explosions and for converting chemical energy into kinetic energy from outflowing exhaust gases of the explosions, in particular for generating thrust for propulsion of an aircraft, with the repeated execution of the following steps :
• Supply of a flowable explosive material or of components, which form an explosive material when mixed, into a combustion chamber (21), wherein a discharge device of the combustion chamber (21) is at least partially closed by means of a movable nozzle control element (26), and generation of an overpressure in the combustion chamber (21) with respect to an ambient pressure;
• Opening the discharge device;
• Igniting the explosive material in the combustion chamber (21);
• Discharging of explosion gases through the discharge device;
• at least partial closure of the discharge device by means of the movable nozzle control element (26); and
• Thereby at least approximate adjustment of the optimum, ideal area ratio between the nozzle outlet area and the nozzle inlet area;
**characterized in that** the combustion chamber (21) has a variable volume and **in that**
• for opening the discharge device and when discharging explosion gases several partial nozzles (40) are opened in synchronization with each other;
• for at least partially closing the outlet device several partial nozzles (40) are at least partially closed in synchronization with one another;
• and with the sum of the partial nozzles (40) a nozzle is realized, which ensures that the optimum, ideal area ratio between the nozzle outlet area and the nozzle inlet area is always at least approximately set during an entire discharge time,
• wherein each of the partial nozzles (40) has a partial valve seat (41) and a partial valve body (42), and a partial nozzle inlet area (43) is determined by the position of the partial valve body (42) with respect to the partial valve seat (41), wherein the nozzle control element (26) determines the positions of the partial valve bodies (42) with respect to the partial valve seats (41),
• and thus the nozzle control element (26) varies a total nozzle inlet area which is the sum of the partial nozzle inlet areas (43), wherein the adjusting element (25) controls a movement of the nozzle control element (26) for adjusting the total nozzle inlet area at least approximately in accordance with said ideal area ratio.

12. Method according to claim 11, wherein the substeps "opening the discharge device", "igniting the explosive material in the combustion chamber" and "discharging explosion gases through the discharge device by means of the movable nozzle control element" are carried out overlapping in time.

13. Method according to claim 11 or 12, wherein the partial nozzles (40) each have partial valve seats (41) and partial valve bodies (42), and the partial valve bodies (42) are moved synchronously with respect to the partial valve seats (41) by the nozzle control element (26).

## Revendications

1. Machine à entraînement par impulsions pour la production répétée d'explosions et pour la conversion d'énergie chimique en énergie cinétique de gaz d'échappement sortant des explosions, en particulier pour la production de poussée pour la propulsion d'un aéronef, comprenant
- une chambre de combustion (21),
- au moins une conduite d'alimentation pour amener à la chambre de combustion (21) un matériau explosif fluide ou des composants qui forment un matériau explosif lorsqu'ils sont mélangés ;
- un dispositif d'évacuation pour l'évacuation dirigée d'une pression de gaz générée par l'allumage du matériau explosif dans la chambre de combustion (21),
- un élément de réglage de buse mobile (26) pour la fermeture partielle ou totale du dispositif d'évacuation,
- un élément de réglage (25) qui est conçu pour continuer à ouvrir le dispositif d'évacuation après une ouverture du dispositif d'évacuation et pendant un écoulement de gaz d'explosion par le dispositif d'évacuation et pour régler ainsi au moins approximativement le rapport de surface optimal, idéal entre la surface de sortie de la buse et la surface d'entrée de la buse,
**caractérisé en ce que** la chambre de combustion (21) a un volume variable et **en ce que** le dispositif d'évacuation présente plusieurs buses partielles (40) pour évacuer la pression du gaz, et une position des buses partielles (40) peut être réglée par l'élément de réglage (25),
et la somme des buses partielles (40) permet de réaliser une buse qui garantit que le rapport de surface idéal optimal entre la surface de sortie de la buse et la surface d'entrée de la buse est toujours réglé, au moins approximativement, pendant toute la durée de l'écoulement,
chacune des buses partielles (40) présentant un siège de soupape partiel (41) et un corps de soupape partiel (42), et une surface d'entrée de buse partielle (43) étant déterminée par la position du corps de soupape partiel (42) par rapport au siège de soupape partiel (41), l'élément de régulation de buse (26) déterminant les positions des corps de soupape partiels (42) par rapport aux sièges de soupape partiels (41),
et ainsi l'élément de réglage de buse (26) est agencé pour faire varier une surface totale d'entrée de buse qui est la somme des surfaces d'entrée de buse partielles (43), l'élément de réglage (25) étant agencé pour commander un mouvement de l'élément de réglage de buse (26) pour régler la surface totale d'entrée de buse au moins approximativement selon ledit rapport de surface idéal.

2. Machine à entraînement par impulsions selon la revendication 1, dans laquelle des ouvertures des buses partielles (40) présentent des ouvertures annulaires disposées de manière concentrique les unes par rapport aux autres.

3. Machine à entraînement par impulsions selon l'une des revendications 1 ou 2, présentant une paroi de séparation (28) disposée de manière déplaçable, qui forme une délimitation de la chambre de combustion (21),

4. Machine à entraînement par impulsions selon la revendication 3, dans laquelle la paroi de séparation (28) forme une limite de la chambre de combustion (21) opposée au dispositif d'évacuation, et en particulier l'élément de réglage (25) est guidé à travers la paroi de séparation (28),

5. Machine à entraînement par impulsions selon l'une des revendications 1 à 4, comprenant un dispositif de compression (1), (2) pour comprimer le matériau explosive fluide ou au moins l'un des composants du matériau explosive.

6. Machine à entraînement par impulsions selon la revendication 5, dans laquelle le dispositif de compression comprend un compresseur (2) fonctionnant en continu, en particulier un compresseur rotatif, par exemple un turbocompresseur.

7. Machine à entraînement par impulsions selon la revendication 6, comprenant une turbine (4), le compresseur (2) étant entraîné par la turbine (4), et la turbine (4) étant agencée pour être entraînée par un jet de gaz d'échappement (5) provenant d'une chambre de combustion de turbine (6), la chambre de combustion de turbine (6) étant différente de la chambre de combustion (21) .

8. Machine à entraînement par impulsions selon la revendication 6, comprenant une turbine (4), le compresseur (2) étant entraîné par la turbine (4), et la turbine (4) étant agencée pour être entraînée par les gaz d'échappement (17) de la chambre de combustion (21),

9. Machine à entraînement par impulsions selon la revendication 8, comprenant une sortie destinée à fournir un travail mécanique à un utilisateur mécanique, en particulier à au moins un des éléments suivants
- une turbomachine, notamment une hélice, pour la propulsion d'un véhicule, notamment d'un aéronef,
- un générateur pour la conversion en énergie électrique.

10. Machine à entraînement par impulsions selon l'une des revendications 5 à 9, comprenant un dispositif de compression sous la forme d'une entrée d'air (1), pour comprimer l'air entrant à une vitesse supersonique de la machine à entraînement par impulsions par rapport à l'air ambiant.

11. Procédé pour une machine à entraînement par impulsions de génération répétée d'explosions et de conversion d'énergie chimique en énergie cinétique des gaz d'échappement des explosions, en particulier pour générer une poussée pour la propulsion d'un aéronef, comprenant l'exécution répétée des étapes suivantes :
- Alimenter une matière explosive fluide ou de composants qui forment un matériau explosif lorsqu'ils sont mélangés, dans une chambre de combustion (21), un dispositif d'évacuation de la chambre de combustion (21) étant au moins partiellement fermé au moyen d'un élément de réglage de buse mobile (26), et générer une surpression dans la chambre de combustion (21) par rapport à une pression ambiante ;
- Ouvrir le dispositif d'évacuation ;
- Allumer le matériau explosif dans la chambre de combustion (21) ;
- Évacuer des gaz explosifs par le dispositif d'évacuation ;
- Fermer au moins partiellement le dispositif d'évacuation au moyen de l'élément de réglage de buse mobile (26) ; et
ce faisant, régler au moins approximativement le rapport de surface optimal et idéal entre la surface de sortie de la buse et la surface d'entrée de la buse ;
**caractérisé en ce que** la chambre de combustion (21) présente un volume variable et **en ce que**
- pour ouvrir le dispositif d'évacuation et lors de l'évacuation de gaz d'explosion, plusieurs buses partielles (40) sont ouvertes de manière synchrone les unes par rapport aux autres ;
- pour fermer au moins partiellement le dispositif d'évacuation, plusieurs buses partielles (40) sont fermées au moins partiellement de manière synchrone les unes avec les autres ;
- et la somme des buses partielles (40) permet de réaliser une buse qui garantit que, pendant toute une durée d'écoulement, le rapport de surface optimal et idéal entre la surface de sortie de la buse et la surface d'entrée de la buse est toujours réglé au moins approximativement,
- chacune des buses partielles (40) présentent un siège de soupape partiel (41) et un corps de soupape partiel (42), et une surface d'entrée de buse partielle (43) étant déterminée par la position du corps de soupape partiel (42) par rapport au siège de soupape partiel (41), l'élément de réglage de buse (26) déterminant les positions des corps de soupape partiels (42) par rapport aux sièges de soupape partiels (41),
- et ainsi l'élément de régulation de buse (26) fait varier une surface totale d'entrée de buse qui est la somme des surfaces partielles d'entrée de buse (43), l'élément de réglage (25) commandant un mouvement de l'élément de réglage de buse (26) pour régler la surface totale d'entrée de buse au moins approximativement selon ledit rapport de surface idéal.

12. Procédé selon la revendication 11, dans lequel les étapes partielles "ouvrir le dispositif d'évacuation", "allumer le matériau explosif dans la chambre de combustion" et "évacuer des gaz d'explosion par le dispositif d'évacuation au moyen de l'élément de réglage de buse mobile" sont exécutées en se chevauchant dans le temps.

13. Procédé selon la revendication 11 ou 12, dans lequel les buses partielles (40) présentent chacune des sièges de soupape partiels (41) et des corps de soupape partiels (42), et les corps de soupape partiels (42) sont déplacés de manière synchrone les uns par rapport aux sièges de soupape partiels (41) par l'élément de régulation de buse (26),
